# EUROPEAN PATENT SPECIFICATION

(11) **EP 3 210 796 B1**
(45) Date of publication and mention of the grant of the patent: **23.01.2019**
(21) Application number: 17157965.9
(22) Date of filing: 24.02.2017
(51) Int. Cl.: B60C 1/00, C08L 9/00, C08L 9/06, C08L 57/02, C08J 3/24

(54) **RUBBER COMPOSITION FOR TYRES WITH GOOD ROLLING RESISTANCE AND WET GRIP PROPERTIES**
KAUTSCHUKZUSAMMENSETZUNG FÜR REIFEN MIT GUTEM ROLLWIDERSTAND UND GUTER NASSGRIFFLEISTUNG
COMPOSITION DE CAOUTCHOUCS POUR PNEUMATIQUES AYANT DE BONNES PROPRIÉTÉS DE RESISTANCE AU ROULEMENT ET D'ADHÉRENCE SUR SOL MOUILLÉ

(30) Priority: 26.02.2016 GB 201603370
(43) Date of publication of application: 30.08.2017
(73) Proprietor: Apollo Tyres Global R&D B.V., 7521 PT Enschede (NL)
(72) Inventor: REUVEKAMP, Louis-Philipp Antoine Eugène Maria, 7546 GE Enschede (NL); ZEEMAN, Raymond, 7582 EJ Losser (NL); JANSSEN, Jane Johanna, deceased (NL)
(74) Representative: Michalski Hüttermann & Partner Patentanwälte mbB

(56) References cited:
- WO-A1-2015/076049
- JP-A- 2012 007 145
- JP-A- 2014 231 612
- US-A1- 2013 153 100

## Description

The present invention relates to a cross-linkable rubber composition, a cross-linked rubber composition obtained by cross-linking such a rubber composition, a method of preparing a tyre and a tyre.

Tyres can be optimized on several properties. One very important feature with respect to the environment is the rolling resistance. The lower the rolling resistance of a tyre, the less fuel is needed. As the tread is in direct contact with the road, the tread has the highest influence on the overall rolling resistance of the tyre. Rolling resistance can both be related to the tread material properties as well as the tread pattern. In principle, a tread material with a low tangent delta (tan δ) at 70 °C has a lower rolling resistance.

The car should also be able to brake quickly in several weather conditions. The wet grip properties can also be tuned by the material properties of the tread. In principle, a tread material with a high tan δ at 0 °C has better wet grip properties. However, optimizing for wet grip normally results in a trade-off on the rolling resistance properties

For example, treads containing significant amounts of BR normally have a low rolling resistance but bad wet grip properties, whereas treads containing significant amounts of SBR normally have a high rolling resistance and good wet grip properties. Blends of BR and SBR are commonly used to obtain well-balanced properties (Hofman- Rubber Technology Handbook, 56, 1996*).* On the other hand, several type of resins can be added to increase the wet grip properties, but have a negative effect on the rolling resistance (J Appl Polym Sci 65: 1429-1439, 1997*).*

As a rule of thumb, optimizing a tread for rolling resistance reduces the wet grip and vice versa.

WO 2011/162771 A1 addresses these conflicting requirements by disclosing tyres, especially tyres for passenger and light track vehicles, that have treads constructed of a silica reinforced material that is based upon a cross-linkable rubber composition that includes, per hundred parts by weight of rubber (phr), between 50 phr and 90 phr of natural rubber and between 10 phr and 50 phr of a silanol end-functionalized styrene-butadiene rubber and may include between 5 phr and 40 phr of a plasticizing resin. The plasticizing resin may be characterized as having a glass transition temperature Tg of between 30 °C and 120 °C or alternatively, between 45 °C and 85 °C. The plasticizing resin may be a polylimonene resin. Tyres manufactured with such treads may be characterized as having improved rolling resistance with no loss in wet or dry grip properties.

According to WO 2006/076670 A2, vulcanizable elastomeric compositions and vulcanizates are prepared by employing a titanium compound. The titanium compound is believed to enhance the reaction between a silica particle and a silica-reactive compound. A method according to this publication comprises the steps of: mixing ingredients including silica and at least one elastomer to form a first mixture, where the elastomer optionally includes silica-reactive functionalized elastomer; cooling the first mixture; further mixing the first mixture, optionally with additional ingredients including a silica coupling agent, a silica reactive dispersing agent or both, to form an intermediate mixture, with the proviso that at least one of the ingredients mixed to form the first mixture or the additional ingredients added to form the intermediate composition includes a silica-reactive compound; adding ingredients including a curative to the intermediate mixture to form a vulcanizable mixture; mixing the vulcanizable mixture; forming the vulcanizable mixture into a tyre component; building a tyre by including the tyre component; curing the tyre; where a titanium compound is added to at least one of said step of mixing ingredients to form a first mixture or said step of further mixing to form an intermediate mixture.

US 20150/99844 A (WO 2013/157545) discloses a rubber composition for tyres comprising: per 100 parts by weight of diene rubber containing from 5 to 50 wt. % of modified BR having a vinyl unit content of 10 to 60 wt. %, from 2 to 50 parts by weight of an aromatic modified terpene resin having a softening point of 100 to 130 °C, and a total content of 60 to 130 parts by weight of two types of silica, that is silica X and silica Y; a proportion of the silica relative to a total amount of a reinforcing filler containing carbon black being 85 wt. % or greater; a nitrogen adsorption specific surface area of the silica X is 140 m²/g or greater; and a nitrogen adsorption specific surface area of the silica Y is greater than 100 m²/g and less than 140 m²/g.

WO 2013/147827 A1 relates to rubber articles, including tires and tire treads, that are manufactured from a rubber composition that includes a functionalized styrene-butadiene rubber (SBR) and a polybutadiene rubber, wherein the functionalized SBR includes a functional group attached as an active moiety and wherein the butadiene portion of the SBR has as trans-1,4 content of between 30 wt. % and 70 wt. %. The rubber composition further includes a plasticizing system having a plasticizing resin having a glass transition temperature (Tg) of at least 25 °C and a plasticizing liquid, wherein the plasticizing system is added in an effective amount to provide the rubber composition with a glass transition temperature of between -25 °C and -15 °C and with a dynamic modulus G* at 60 °C of between 0.8 MPa and 1.3 MPa. The rubber composition is reinforced with a silica filler.

EP 3 064 544 A1 discloses a pneumatic tire, comprising a tread formed from a rubber composition, the rubber composition comprising: an oil-extended polybutadiene rubber having a cis content of 95 mol% or more, a vinyl content of 1 mol% or less, and a weight average molecular weight of 530,000 or more; at least one of an isoprene-based diene rubber or a styrene-butadiene rubber; a carbon black having a nitrogen adsorption specific surface area of 110 to 200 m²/g; and stearic acid, the oil-extended polybutadiene rubber being synthesized using a rare earth catalyst, the rubber composition comprising, based on 100% by mass of the total rubber solids, 8% to 65% by mass of a polybutadiene rubber component contained in the oil-extended polybutadiene rubber and 20% to 85% by mass of the at least one of an isoprene-based diene rubber or a styrene-butadiene rubber, the rubber composition comprising, relative to 100 parts by mass of the total rubber solids, 20 to 100 parts by mass of the carbon black and 1.5 to 2.99 parts by mass of the stearic acid, the rubber composition having an amount of process oil of 9 parts by mass or less relative to 100 parts by mass of the total rubber solids.

The addition of resins to the tread rubber mixture can increase the wet grip of the tyre but also increase rolling resistance. The addition of (modified) solution SBRs can reduce the rolling resistance but also reduces the wet grip. Cured BR imparts excellent abrasion resistance (good tread wear), and low rolling resistance (good fuel economy) due to its low glass transition however its low Tg also leads to poor wet traction properties.

The present invention has the object of providing a tread rubber composition which, when it is cured and employed in a vehicle tyre, displays both an increased wet grip as well as a reduced rolling resistance.

This object is achieved by a cross-linkable rubber composition, the cross-linkable rubber composition comprising, per hundred parts by weight of rubber (phr):
≥ 1 phr to ≤ 99 phr of a styrene-butadiene rubber (SBR) component;
≥ 1 phr to ≤ 99 phr of a polybutadiene rubber (BR) component;
≥ 5 phr to ≤ 35 phr of a polyterpene resin component;
wherein the polybutadiene rubber has a branching index G (defined as the tan δ value in a dynamic mechanical test at a frequency of 0.05 Hz) of ≥ 0.7 to ≤ 0.85 and a polydispersity index Mw/Mn of ≥ 3.5 and ≤ 4.5 and the polyterpene resin has a molecular weight Mw of ≥ 900 to ≤ 1200 g/mol. Surprisingly, it was observed that a polyterpene resin had significantly lower effect on the wet grip properties in combination with a less branched BR such as a Nd-catalysed BR whereas a significant effect was observed for a similar recipe with more branched BR such as a Ni-catalysed BR.

For the purposes of the present invention the branching index G is defined as follows. In general, the tan δ in a dynamic mechanical test at low frequencies gives an indication of branching. A tan δ at a frequency of 0.05 Hz is defined as the branching index G in this regard. A high value of tan δ represents a linear polymer, whereas a low value represents a branched polymer. Frequency sweep measurements may be performed on a DMA equipment of the type RPA 2000 (Alpha Technologies) to measure the tan δ. For the numerical values of G in the present invention, the temperature at which the dynamic mechanical analysis (DMA) is performed is set to constant 100 °C and a strain of 14% is applied. The frequency is varied from 0.02 to 48 Hz. The tan δ at a frequency of 0.05 Hz is then used as G.

As used herein, the term "MW" is meant to mean "molecular weight", wherein the term "Mw" is meant to mean a weight average molecular weight as it is used in describing polymers.

The cross-linkable rubber composition according to the invention comprises cross-linkable groups in the individual rubber components. They may be cross-linked (cured, vulcanised) by methods known to a skilled person in the rubber technology field.

The SBR rubber component may contain one type of SBR rubber or several different types. Preferably, at least one type of SBR rubber is manufactured according to the solution process (sSBR or solution SBR). Likewise, the BR rubber component may contain one type of BR rubber or several different types. It is further understood that in formulations discussed in connection with the present invention the phr amount of all rubber components adds up to 100.

The polydispersity index Mw/Mn for the polybutadiene rubber is preferably ≥ 3.7 and ≤ 4.2 and can be determined using gel permeation chromatography against known standards.

Polyterpene resins are based on natural and renewable feedstocks, including alpha-pinene, betapinene and d-limonene. A common feature of these resins is that they are unpolar resins. Their molecular weight Mw is preferably ≥ 940 to ≤ 1100 g/mol.

The cross-linkable rubber compositions may be sulfur-vulcanizable and/or peroxide-vulcanizable. Other vulcanization systems may also be used. If desired, additives can be added. Examples of usual additives are stabilizers, antioxidants, lubricants, fillers, dyes, pigments, flame retardants, conductive fibres and reinforcing fibres.

If desired, the cross-linkable rubber composition can also comprise a coupling agent. Suitable coupling agents comprise silane compounds. Particularly suitable silane compounds comprise di-and tetrasulphides. It is possible for the rubber composition to be provided with a conductive filler to make it at least partially conductive.

Further embodiments and aspects of the present invention will now be described. They can be combined freely unless the context clearly indicates otherwise.

In one embodiment of the rubber composition according to the invention the polyterpene resin component comprises a polylimonene resin.

In another embodiment of the rubber composition according to the invention the polybutadiene rubber component comprises a polybutadiene rubber which has been obtained under nickel catalysis. Using nickel compounds in a catalyst system yields BR with a good degree of branching and a high *cis* group content. An example for a suitable catalyst system is the ternary system R₃Al/Ni-octanoate/BF₃ etherate.

In another embodiment of the rubber composition according to the invention the polybutadiene rubber component comprises a polybutadiene rubber with a *cis* group content of ≥ 90%. Preferably the *cis* group content is ≥ 95%. The cis content of the polybutadiene rubber is usually provided by the supplier and is may be determined with FTIR. The method is based on the calculation of the ratio between the intensity of the bands attributable to the 1,4-trans and 1,2-vinyl isomers and a reference band (internal standard) falling at 1312 cm⁻¹ (L. J. Bellamy, The Infrared Spectra of Complex Molecules, Vol. 1 Third Edition, Chapman and Hall). The 1,4-cis content is determined by the difference from 100. Sample preparation is performed on a polybutadiene film, obtained by starting from a solution, evaporated on a KBr window.

In another embodiment of the rubber composition according to the invention the styrene-butadiene rubber component comprises a first styrene-butadiene rubber and a second styrene-butadiene rubber which is different from the first styrene-butadiene rubber.

Preferably the first styrene-butadiene rubber is a functionalized styrene-butadiene rubber and the second styrene-butadiene rubber is an unfunctionalised styrene-butadiene rubber. Examples for functionalized styrene-butadiene rubbers are those comprising isocyanate groups, hydroxyl groups, silane-sulfide groups, amino groups and/or carboxylic anhydride groups.

It is also preferred that this rubber composition comprises ≥ 20 phr to ≤ 70 phr of the first styrene-butadiene rubber component, ≥ 20 phr to ≤ 70 phr of the second styrene-butadiene rubber component, ≥ 20 phr to ≤ 70 phr of the polybutadiene rubber component and ≥ 5 phr to ≤ 35 phr of the polyterpene resin component. More preferred are ≥ 40 phr to ≤ 50 phr of the first styrene-butadiene rubber component, ≥ 30 phr to ≤ 40 phr of the second styrene-butadiene rubber component, ≥ 25 phr to ≤ 35 phr of the polybutadiene rubber component and ≥ 15 phr to ≤ 25 phr of the polyterpene resin component.

It is also preferred that the rubber composition comprises a filler component. This filler can be carbon black, silica or a combination of both. The total amount of filler in the rubber composition is preferably ≥ 50 phr to ≤ 120 phr, more preferably ≥ 65 phr to ≤ 95 phr.

Another aspect of the present invention is a cross-linked rubber composition obtained by cross-linking the rubber composition according to the invention.

In one embodiment the cross-linked rubber composition has a tan δ at 0 °C of ≥ 0.4 to ≤ 0.8 and a tan δ at 70 °C of ≥ 0.07 to ≤ 0.2. These values can be determined by recording a DMA curve according to ISO 6721.

In another embodiment the cross-linked rubber composition has a glass transition temperature Tg of ≥ -15 °C to ≤ -5 °C. These values can be determined by recording a DMA curve according to ISO 6721 where the glass transition temperature is the maximum of the curve.

The present invention also relates to a method of preparing a tyre, comprising the steps of:
- providing a tyre assembly comprising a rubber composition according to the invention;
- cross-linking at least the rubber composition according to the invention in the tyre assembly.

The present invention also encompasses a tyre comprising a tyre tread, wherein the tyre tread comprises a cross-linked rubber composition according to the invention.

The present invention will be further described with reference to the following figures and examples without wishing to be limited by them.
FIG 1 shows the resin uptake for high molecular weight resins in example 1
FIG. 2 shows the resin uptake for low molecular weight resins in example 1
FIG. 3 shows DMA curves from example 2 at a temperature range from -80 °C to 20 °C
FIG. 4 shows DMA curves from example 2 at a temperature range from 20 °C to 80 °C

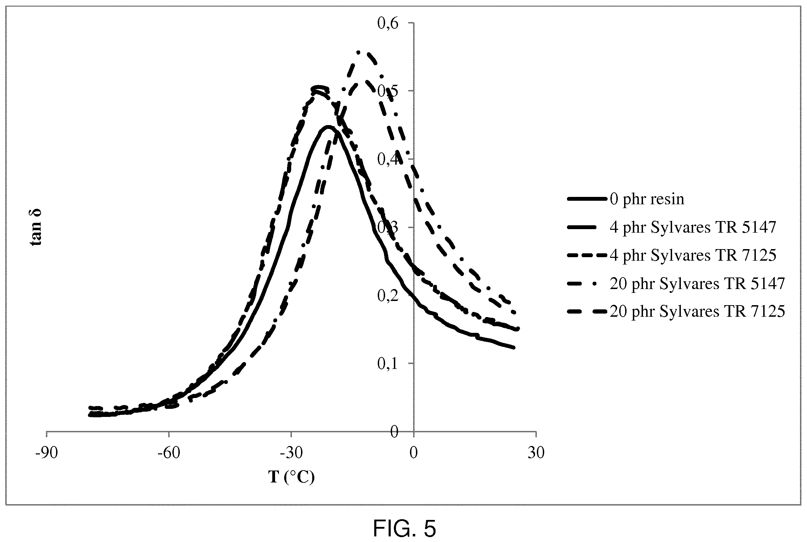

FIG. 5 shows DMA curves from example 3 at a temperature range from -80 °C to 20 °C

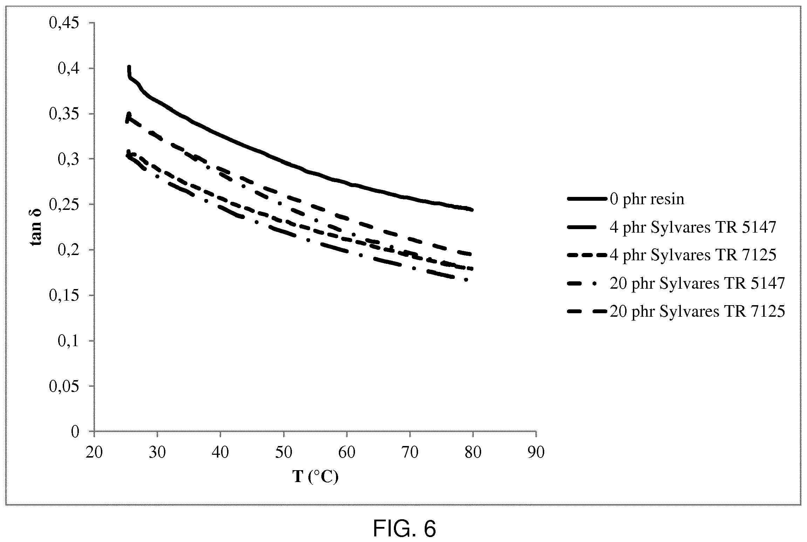

FIG. 6 shows DMA curves from example 3 at a temperature range from 20 °C to 80 °C

### Example 1

The solubility of several resins into a high-branched BR/SBR and a low-branched BR/SBR mix, as described in the table below, were studied following a procedure described in the PhD thesis of Guo, R. "Improved properties of dissimilar rubber-rubber blends using plasma polymer encapsulated curatives. 2009, University of Twente: Enschede, the Netherlands, page 42-44. http://dx.doi.org/10.3990/1.9789036529143."

Small vulcanized rubber sheets were prepared according to the table below and placed in a glass bottle containing a resin in such a fashion that all sides were packed with the resin. The bottle was subsequently placed in an oven at 60 °C. The sample weights were measured after careful cleaning of the sheet. The amount of weight increase over time corresponds with the solubility of the resin into the rubber mix.

| | **high branched BR mixture** | **low branched BR mixture** |
|---|---|---|
| **Component** | amount (phr) | amount (phr) |
| SBR | 70 | 70 |
| BR (Ni cat) | 30 | - |
| BR (Nd cat) | - | 30 |
| ZnO | 3 | 3 |
| Stearic acid | 1 | 1 |
| Sulfur | 0.25 | 0.25 |
| TBBS | 0.25 | 0.25 |
| **Total** | **104.5** | **104.5** |

The SBR rubber used was BUNA VSL 5025-OHM, a solution SBR with a vinyl content of 50% and a styrene content of 25%.

The polybutadiene rubber obtained under nickel catalysis had a polydispersity index Mw/Mn of 4.2 and a branching index G of 0.73. In contrast, the polybutadiene rubber obtained under neodymium catalysis had a polydispersity index Mw/Mn of 2.4 and a branching index G of 0.86.

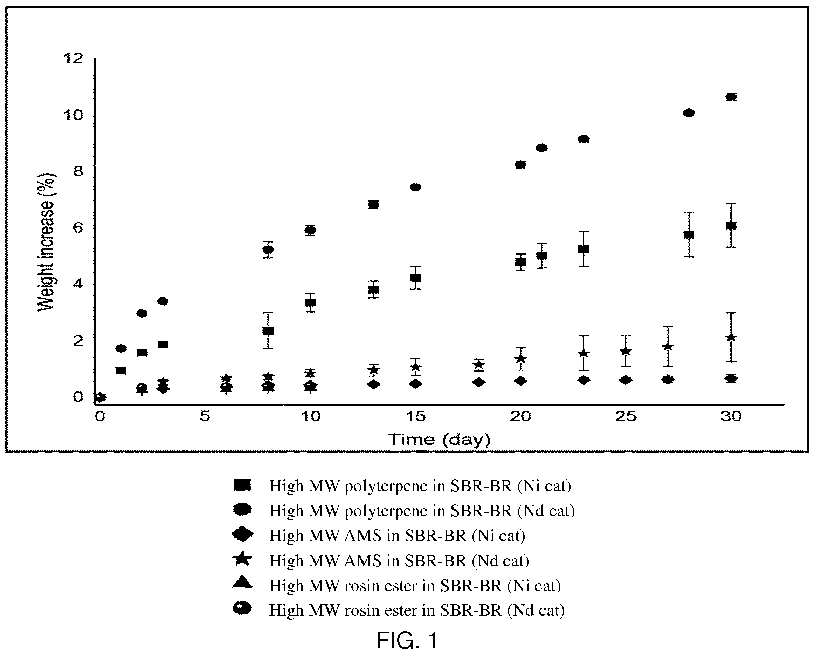

The results of a first set of experiments are depicted in FIG. 1. The weight increase of the vulcanized rubber sheets was measured over the course of 30 days. The resins used in this first series of experiments were characterised as high molecular weight resins. In particular, the resins were:
High MW polyterpene resin: Sylvares TR 7125 having a Mw of 1090 g/mol
High MW AMS (alpha-methyl styrene) resin: Sylvares SA 140 having a Mw of 4019 g/mol
High MW rosin ester: Sylvacote 7003 having a Mw of 9614 g/mol

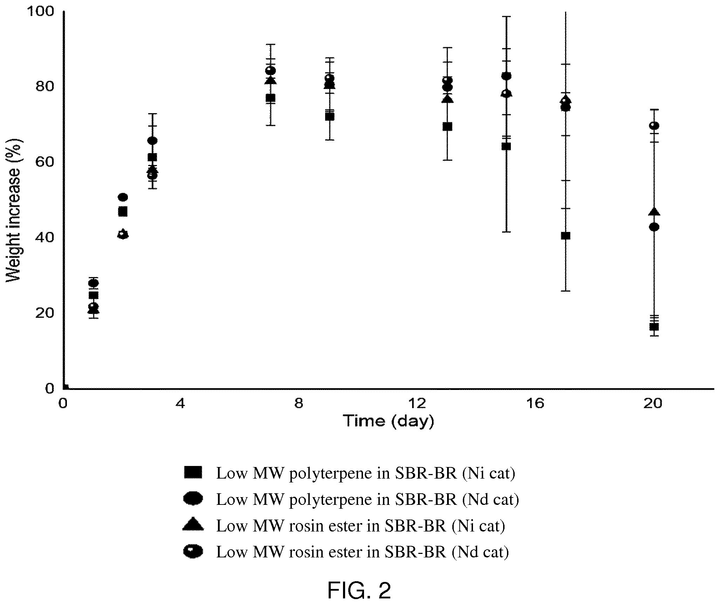

The results of a second set of experiments are depicted in FIG. 2. The weight increase of the vulcanized rubber sheets was measured over the course of 20 days. The resins used in this second series of experiments were characterised as low molecular weight resins. In particular, the resins were:
a low MW polyterpene resin having a Mw of 392 g/mol
a low MW rosin ester having a Mw of 430 g/mol

From the results in this example it is clear that all low MW resins diffuse quickly in both the high-branched and low-branched BR/SBR mixture. No clear differences between low MW resin types could be observed.

The high MW resins, on the other hand, show a significant different behaviour for high MW polyterpene at the one hand, and high MW AMS and rosin ester at the other hand. The AMS and rosin ester are taken up much slower in the mixture, and a small difference between high branched and low branched BR mixture is only for the AMS resin is only apparent after 10 days. The polyterpene is taken up faster in the mixture in both the high branched and low branched BR mixture, however, the uptake is about twice as fast in the low branched BR mixture and apparent from day 1.

### Example 2

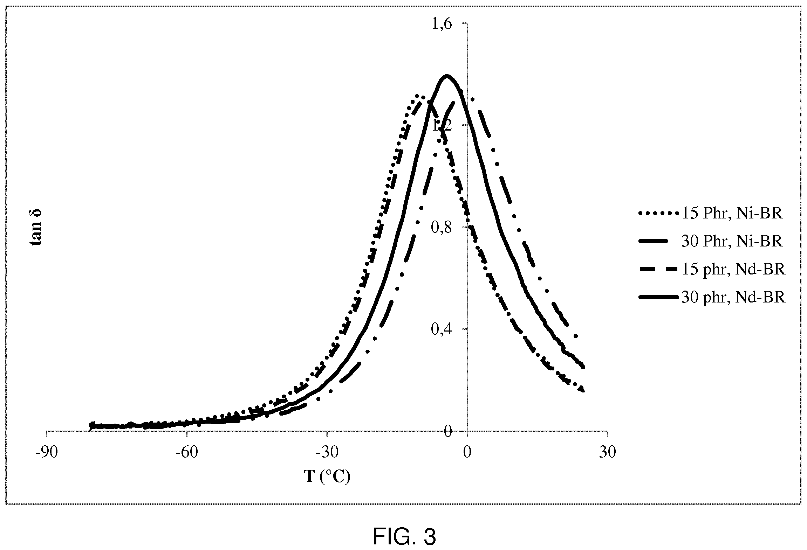

Samples with a high MW polyterpene resin were mixed in various amounts in a standard recipe containing SBR and either high (Ni catalysed) or low (Nd catalysed) branched BR and vulcanized to study the DMA curve according to ISO 6721. The recipe (amounts stated are given in phr) and glass transition temperatures Tg are given in the table below and the obtained graph is shown in FIG. 3.

The SBR rubber used was BUNA VSL 5025-OHM, a solution SBR with a vinyl content of 50% and a styrene content of 25%.

The polybutadiene rubber obtained under nickel catalysis (Ni BR) had a polydispersity index Mw/Mn of 4.2 and a branching index G of 0.73. In contrast, the polybutadiene rubber obtained under neodymium catalysis (Nd BR) had a polydispersity index Mw/Mn of 2.4 and a branching index G of 0.86

The resin Sylvares TR 7125 is a polylimonene resin with a molecular weight of about 1090 g/mol, a softening point of about 125 ° C, and a glass transition temperature of about 73 °C.

A clear difference in Tg was observed for the mixture containing high branched Ni BR and the mixture containing low branched Nd BR when adding 15 or 30 phr of resin in the mixture. Additional amounts (from 15 phr to 30 phr) of the Sylvares TR 7125 resin in combination with the Ni BR gave a significantly higher shift in Tg than in the Nd BR sample.

| | Comparative Sample 1 | Comparative Sample 2 | Sample 1 | Sample 2 |
|---|---|---|---|---|
| S SBR* | 70 | 70 | 70 | 70 |
| Nd BR | 30 | 30 | 0 | 0 |
| Ni BR | 0 | 0 | 30 | 30 |
| Sylvares TR 7125 | 15 | 30 | 15 | 30 |
| Tg | -9.2 | -4.3 | -10.1 | -0.9 |

| | | | | |
|---|---|---|---|---|
| * In addition to the components listed in the table, all samples contained a vulcanization package of 1.5 phr sulphur, 1.5 phr TBBS (N-Tert-Butyl-2 benzothiazole sulfenamide), 3 phr ZnO and 1 phr stearic acid. | | | | |

This difference can be related to the mixing behaviour of the compounds. In the comparative samples a larger amount of Sylvares TR 7125 will be mixed in the Nd BR phase, thereby minimizing a Tg shift at lower temperatures. The high Tg shift in sample 2 suggests that most of the Sylvares TR 7125 is mixed in the SBR phase. This Tg shift is expected to have a positive effect on the wet grip of the tire.

Without being bound to theory, it is believed that the high MW polyterpene resin is less miscible with a high branched BR (Ni BR) than a low branched BR (Nd BR). In the first case the polyterpene is more likely to end up in the SBR phase, causing a Tg shift and a higher tan δ at 0 °C than in the latter case. In general Nd BR has better rolling resistance properties than Ni BR, this is also apparent from the tan δ at 70°C in FIG 3. However, the difference between Ni BR and Nd BR tan δ at 70°C is reduced upon the addition of more resin.

Overall, the slow migration in BR suggests a higher tendency of the high MW polyterpene to mix with the SBR phase, thereby increasing the wet grip properties, without significantly influencing the rolling resistance properties.

### Example 3

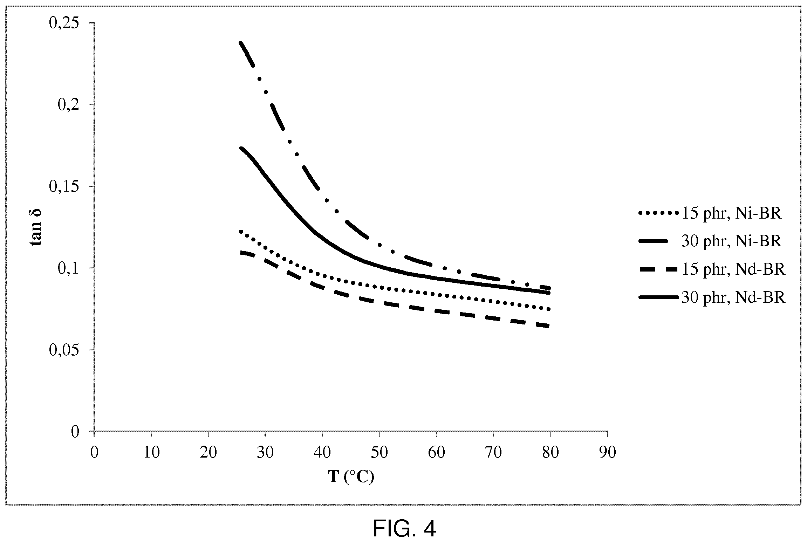

Two polyterpene resins were investigated for their effect on the tan δ on a cured rubber formulation with 70 phr of the SBR used in example 2 and 30 phr of the Ni BR used in example 2. The measured graphs are given in FIG 4.

As already mentioned, the resin Sylvares TR 7125 is a polylimonene resin with a molecular weight of about 1090 g/mol, a softening point of about 125 ° C, and a glass transition temperature of about 73 °C. Sylvares TR 5147 is a polylimonene resin having a molecular weight of about 945 g/mol, a softening point of about 120 °C and has a glass transition temperature of about 71°C.

The results are given in the following table. Tan δ values are normalized to 100 for the rubber not containing any polyterpene resin.

| | no added resin | Sylvares TR 5147 | Sylvares TR 7125 |
|---|---|---|---|
| tan δ (0 °C) 4 phr resin | 100 | 123 | 122 |
| tan δ (70 °C) 4 phr resin | 100 | 131 | 127 |
| tan δ (0 °C) 20 phr resin | 100 | 196 | 177 |
| tan δ (70 °C) 20 phr resin | 100 | 123 | 119 |

Therefore, a high MW polyterpene combined with a high branched BR and SBR results in an excellent balance of tyre tread properties, as apparent from the high tan δ at 0°C and low tan δ at 70 °C values.

## Claims

1. A cross-linkable rubber composition, the cross-linkable rubber composition comprising, per hundred parts by weight of rubber (phr):
≥ 1 phr to ≤ 99 phr of a styrene-butadiene rubber (SBR) component;
≥ 1 phr to ≤ 99 phr of a polybutadiene rubber (BR) component;
≥ 5 phr to ≤ 35 phr of a polyterpene resin component;
**characterised in that**
the polybutadiene rubber has a branching index G (defined as the tan δ value in a dynamic mechanical test at a frequency of 0.05 Hz) of ≥ 0.7 to ≤ 0.85 and a polydispersity index Mw/Mn of ≥ 3.5 and ≤ 4.5 and
the polyterpene resin has a molecular weight Mw of ≥ 900 to ≤ 1200 g/mol.

2. The rubber composition according to claim 1, wherein the polyterpene resin component comprises a polylimonene resin.

3. The rubber composition according to claim 1 or 2, wherein the polybutadiene rubber component comprises a polybutadiene rubber which has been obtained under nickel catalysis.

4. The rubber composition according to one of claims 1 to 3, wherein the polybutadiene rubber component comprises a polybutadiene rubber with a *cis* group content of ≥ 90%.

5. The rubber composition according to one of claims 1 to 4, wherein the styrene-butadiene rubber component comprises a first styrene-butadiene rubber and a second styrene-butadiene rubber which is different from the first styrene-butadiene rubber.

6. The rubber composition according to claim 5, wherein the first styrene-butadiene rubber is a functionalized styrene-butadiene rubber and the second styrene-butadiene rubber is an unfunctionalised styrene-butadiene rubber.

7. The rubber composition according to claim 6 comprising ≥ 20 phr to ≤ 70 phr of the first styrene-butadiene rubber component, ≥ 20 phr to ≤ 70 phr of the second styrene-butadiene rubber component, ≥ 20 phr to ≤ 70 phr of the polybutadiene rubber component and ≥ 5 phr to ≤ 35 phr of the polyterpene resin component.

8. The rubber composition according to one of claims 1 to 7 comprising a filler component.

9. A cross-linked rubber composition obtained by cross-linking the rubber composition according to one of claims 1 to 8.

10. The cross-linked rubber composition according to claim 9 with a tan δ at 0 °C of ≥ 0.4 to ≤ 0.8 and a tan δ at 70 °C of ≥ 0.07 to ≤ 0.2.

11. The cross-linked rubber composition according to claim 9 or 10 with a glass transition temperature Tg of ≥ -15 °C to ≤ -5 °C.

12. A method of preparing a tyre, comprising the steps of:
- providing a tyre assembly comprising a rubber composition according to one of claims 1 to 8;
- cross-linking at least the rubber composition according to one of claims 1 to 8 in the tyre assembly.

13. A tyre comprising a tyre tread, **characterized in that** the tyre tread comprises a cross-linked rubber composition according to one of claims 9 to 11.

## Patentansprüche

1. Vernetzbare Kautschukzusammensetzung, wobei die vernetzbare Kautschukzusammensetzung pro hundert Gewichtsteile Kautschuk (phr) Folgendes umfasst:
≥ 1 phr bis ≤ 99 phr einer Styrol-Butadien-Kautschuk(SBR)-Komponente;
≥ 1 phr bis ≤ 99 phr einer Polybutadienkautschuk(BR)-Komponente;
≥ 5 phr bis ≤ 35 phr einer Polyterpenharz-Komponente;
**dadurch gekennzeichnet, dass**
der Polybutadienkautschuk einen Verzweigungsindex G (definiert als der tan-δ-Wert bei einer dynamisch-mechanischen Prüfung bei einer Frequenz von 0,05 Hz) von ≥ 0,7 bis ≤ 0,85 und einen Polydispersitätsindex Mw/Mn von ≥ 3,5 und ≤ 4,5 aufweist und
das Polyterpenharz ein Molekulargewicht Mw von ≥ 900 bis ≤ 1200 g/mol aufweist.

2. Kautschukzusammensetzung nach Anspruch 1, wobei die Polyterpenharz-Komponente ein Polylimonenharz umfasst.

3. Kautschukzusammensetzung nach Anspruch 1 oder 2, wobei die Polybutadienkautschuk-Komponente einen einen unter Nickelkatalyse erhaltenen Polybutadienkautschuk umfasst.

4. Kautschukzusammensetzung nach einem der Ansprüche 1 bis 3, wobei die Polybutadienkautschuk-Komponente einen Polybutadienkautschuk mit einem cis-Gruppen-Gehalt von ≥ 90 % umfasst.

5. Kautschukzusammensetzung nach einem der Ansprüche 1 bis 4, wobei die Styrol-Butadien-Kautschuk-Komponente einen ersten Styrol-Butadien-Kautschuk und einen zweiten Styrol-Butadien-Kautschuk, der von dem ersten Styrol-Butadien-Kautschuk verschieden ist, umfasst.

6. Kautschukzusammensetzung nach Anspruch 5, wobei es sich bei dem ersten Styrol-Butadien-Kautschuk um einen funktionalisierten Styrol-Butadien-Kautschuk handelt und es sich bei dem zweiten Styrol-Butadien-Kautschuk um einen unfunktionalisierten Styrol-Butadien-Kautschuk handelt.

7. Kautschukzusammensetzung nach Anspruch 6, umfassend ≥ 20 phr bis ≤ 70 phr der ersten Styrol-Butadien-Kautschuk-Komponente, ≥ 20 phr bis ≤ 70 phr der zweiten Styrol-Butadien-Kautschuk-Komponente, ≥ 20 phr bis ≤ 70 phr der Polybutadienkautschuk-Komponente und ≥ 5 phr bis ≥ 35 phr der Polyterpenharz-Komponente.

8. Kautschukzusammensetzung nach einem der Ansprüche 1 bis 7, umfassend eine Füllstoff-Komponente.

9. Vernetzte Kautschukzusammensetzung, erhalten durch Vernetzen der Kautschukzusammensetzung nach einem der Ansprüche 1 bis 8.

10. Vernetzte Kautschukzusammensetzung nach Anspruch 9 mit einem tan δ bei 0 °C von ≥ 0,4 bis ≤ 0,8 und einem tan δ bei 70 °C von ≥ 0,07 bis ≤ 0,2.

11. Vernetzte Kautschukzusammensetzung nach Anspruch 9 oder 10 mit einer Glasübergangstemperatur Tg von ≥ -15 °C bis ≤ -5 °C.

12. Verfahren zur Herstellung eines Reifens, das folgende Schritte umfasst:
- Bereitstellung einer Reifenanordnung, die eine Kautschukzusammensetzung nach einem der Ansprüche 1 bis 8 umfasst;
- Vernetzen mindestens der Kautschukzusammensetzung nach einem der Ansprüche 1 bis 8 in der Reifenanordnung.

13. Reifen mit einer Reifenlauffläche, **dadurch gekennzeichnet, dass** die Reifenlauffläche eine vernetzte Kautschukzusammensetzung nach einem der Ansprüche 9 bis 11 umfasst.

## Revendications

1. Composition de caoutchouc réticulable, la composition de caoutchouc réticulable comprenant, pour 100 parties en poids de caoutchouc (phr) :
≥ 1 phr à ≤ 99 phr d'un constituant sous forme de caoutchouc styrène-butadiène (SBR) ;
≥ 1 phr à ≤ 99 phr d'un constituant sous forme de caoutchouc polybutadiène (BR) ;
≥ 5 phr à ≤ 35 phr d'un constituant sous forme de résine de polyterpène ;
**caractérisée en ce que**
le caoutchouc polybutadiène a un indice de ramification G (défini comme la valeur tan δ dans un essai mécanique dynamique à une fréquence de 0,05 Hz) de ≥ 0,7 à ≤ 0,85 et un indice de polydispersité Mw/Mn de ≥ 3,5 et ≤ 4,5 et
la résine de polyterpène a une masse moléculaire Mw de ≥ 900 à ≤ 1 200 g/mol.

2. Composition de caoutchouc selon la revendication 1, dans laquelle le constituant sous forme de résine de polyterpène comprend une résine de polylimonène.

3. Composition de caoutchouc selon la revendication 1 ou 2, dans laquelle le constituant sous forme de caoutchouc polybutadiène comprend un caoutchouc polybutadiène qui a été obtenu en utilisant le nickel comme catalyseur.

4. Composition de caoutchouc selon l'une des revendications 1 à 3, dans laquelle le constituant sous forme de caoutchouc polybutadiène comprend un caoutchouc polybutadiène ayant une teneur en groupes *cis* de ≥ 90 %.

5. Composition de caoutchouc selon l'une des revendications 1 à 4, dans laquelle le constituant sous forme de caoutchouc styrène-butadiène comprend un premier caoutchouc styrène-butadiène et un deuxième caoutchouc styrène-butadiène qui est différent du premier caoutchouc styrène-butadiène.

6. Composition de caoutchouc selon la revendication 5, dans laquelle le premier caoutchouc styrène-butadiène est un caoutchouc styrène-butadiène fonctionnalisé et le deuxième caoutchouc styrène-butadiène est un caoutchouc styrène-butadiène non fonctionnalisé.

7. Composition de caoutchouc selon la revendication 6, comprenant ≥ 20 phr à ≤ 70 phr du premier constituant sous forme de caoutchouc styrène-butadiène, ≥ 20 phr à ≤ 70 phr du deuxième constituant sous forme de caoutchouc styrène-butadiène, ≥ 20 phr à ≤ 70 phr du constituant sous forme de caoutchouc polybutadiène, et ≥ 5 phr à ≤ 35 phr du constituant sous forme de résine de polyterpène.

8. Composition de caoutchouc selon l'une des revendications 1 à 7, comprenant un constituant qui est une charge.

9. Composition de caoutchouc réticulée obtenue par réticulation de la composition de caoutchouc selon l'une des revendications 1 à 8.

10. Composition de caoutchouc réticulée selon la revendication 9, ayant une valeur Tan δ à 0 °C de ≥ 0,4 à ≤ 0,8 et une valeur Tan δ à 70 °C de ≥ 0,07 à ≤ 0,2.

11. Composition de caoutchouc réticulée selon la revendication 9 ou 10, ayant une température de transition vitreuse Tg de ≥ -15 °C à ≤ -5 °C.

12. Procédé de préparation d'un pneu, comprenant les étapes qui consistent à :
- fournir un ensemble pneu comprenant une composition de caoutchouc selon l'une des revendications 1 à 8 ;
- réticuler au moins la composition de caoutchouc selon l'une des revendications 1 à 8 dans l'ensemble pneu.

13. Pneu comprenant une bande de roulement de pneu, **caractérisé en ce que** la bande de roulement du pneu comprend une composition de caoutchouc réticulée selon l'une des revendications 9 à 11.
